# EUROPÄISCHE PATENTANMELDUNG

(11) **EP 3 434 653 A1**
(43) Veröffentlichungstag der Anmeldung: **30.01.2019**
(21) Anmeldenummer: 17182737.1
(22) Anmeldetag: 24.07.2017
(51) Int. Cl.: C03B 19/14, C03B 20/00

(54) **EINSATZ VON EINER POLYALKYLSILOXANVERBINDUNG MIT GERINGEM SILOXANOLGEHALT FÜR DIE HERSTELLUNG VON SYNTHETISCHEM QUARZGLAS**

(71) Anmelder: Heraeus Quarzglas GmbH & Co. KG, 63450 Hanau (DE)
(72) Erfinder: Dr. Schuster, Anke, 06116 Halle (DE); Dr. Trommer, Martin, 06749 Bitterfeld-Wolfen (DE); Barabasch, Michael, 06406 Bernburg (DE)
(74) Vertreter: Heraeus IP

(57) **Zusammenfassung**

Beschrieben wird ein Verfahren zur Herstellung von synthetischem Quarzglas, in welchem ein Einsatzmaterial verwendet wird, das mindestens eine polymerisierbare Polyalkylsiloxanverbindung als ersten Bestandteil; sowie mindestens einen von der polymerisierbaren Polyalkylsiloxanverbindung abweichenden zweiten Bestandteil eines Siloxanmonools und/oder Polydimethylsiloxan-α,ω-diols, insbesondere ausgewählt aus der Gruppe, bestehend aus 1,1,3,3-Tetramethyl-1,3-disiloxandiol; 1,1,3,3,5,5-Hexamethyl-1,5-trisiloxandiol; 1,1,3,3,5,5,7,7-Octamethyltetrasiloxan-1,7-diol; 1,1,3,3,5,5,7,7,9,9-Decamethyl-1,9-pentasiloxandiol; 2,4,4,6,6-Pentamethyl-cyclotrisiloxan-2-ol; 2,4,6,6-Tetramethyl-cyclotrisiloxan-2,4-diol; 2,4,6,6,8,8-Hexamethyl-cyclotetrasiloxan-2,4-diol; und Mischungen der vorgenannten Siloxanole, umfasst, wobei der Gehalt an dem zweiten Bestandteil in dem Einsatzmaterial weniger als 50 ppm, bezogen auf das Einsatzmaterial, beträgt.

## Beschreibung

Die vorliegende Erfindung betrifft ein Verfahren zur Herstellung von synthetischem Quarzglas. Weiterer Gegenstand der vorliegenden Erfindung ist die Verwendung einer Zusammensetzung, enthaltend mindestens eine Polyalkylsiloxanverbindung als ersten Bestandteil und mindestens ein lineares Polydimethylsiloxan-α,ω-diol und/oder cyclisches Polymethylsiloxanol als zweiten Bestandteil zur Herstellung von synthetischem Quarzglas.

Die Verwendung von Polyalkylsiloxanverbindungen und insbesondere von Octamethylcyclotetrasiloxan (OMCTS) für die Herstellung von synthetischem Quarzglas ist seit vielen Jahren bekannt. Dabei ist ferner bekannt, dass die Reinheit des Einsatzmaterials, enthaltend die Polyalkylsiloxanverbindung, für die Durchführung des Herstellungsverfahrens von synthetischem Quarzglas von erheblicher Bedeutung ist.

So führen hochsiedende, d.h. schwer flüchtige Verunreinigungen in der Polyalkylsiloxanverbindung zu Verstopfungen im verwendeten Verdampfersystem und somit zu schwer reproduzierbaren Abscheideprozessen. Die US 5,879,649 sowie die US 5,703,191 lehren daher, dass derartige schwerflüchtige Verunreinigungen aus dem Einsatzmaterialstrom entfernt werden müssen.

Im Detail empfehlen die US 5,879,649 und die US 5,703,191, dass Verunreinigungen mit einem Siedepunkt von mehr als 250 °C (Atmosphärendruck) bis zu einem bestimmten Gehalt aus der Polyalkylsiloxanverbindung entfernt werden müssen, damit eine nachteilige Verfahrensweise vermieden wird. Diese Entgegenhaltungen lehren allerdings nicht die Strukturen der genauen störenden Bestandteile in dem Einsatzmaterialstrom.

Darüber hinaus führen auch polare Verunreinigungen zu polymeren Ablagerungen im Verdampfersystem, die ebenfalls einen reproduzierbaren Abscheideprozess erschweren. In der US 6,590,116 werden diese polaren Verunreinigungen als *hydroxyl end capped molecules* bezeichnet, ohne dass genauere Informationen zu den Strukturen der Verunreinigungen offenbart werden. Die einzige Information, die dieser Entgegenhaltung entnommen werden kann, ist, dass diese *hydroxyl end capped molecules* selbst reaktiv sind, unter den angewendeten Bedingungen zu unerwünschten Polymerisationen führen und unter den angewendeten Bedingungen nicht flüchtig sind. Diese *hydroxyl end capped molecules* können daher nicht für Ablagerungen verantwortlich sein, die sich in den verwendeten Verdampferleitungen bilden.

Zur Herstellung von in der Praxis verwendbaren Polyalkylsiloxanverbindungen ist allerdings die Kenntnis über die genaue Struktur von störenden Verunreinigungen von Vorteil, weil dadurch eine gezielte Überwachung des verwendeten Einsatzmaterials möglich wird und gezielt ein Einsatzmaterial bereitgestellt werden kann, welches frei von diesen konkreten störenden Verunreinigungen ist.

Daher ist es für eine genaue Steuerung des Verfahrens zur Herstellung von synthetischem Quarzglas von Vorteil, detaillierte Kenntnisse über die störenden Verunreinigungen zu haben, so dass diese effizient beseitigt werden können.

Die vorliegende Erfindung stellt sich daher die Aufgabe, störende Verunreinigungen in Einsatzmaterialien zur Herstellung von synthetischem Quarzglas genauer zu identifizieren und ein Verfahren zur Herstellung von synthetischem Quarzglas bereitzustellen, welches einen Einsatzmaterialstrom verwendet, in dem spezifizierte Verunreinigungen allenfalls in Konzentrationen vorkommen, die sich auf die Durchführung des Herstellverfahrens nicht kritisch auswirken. Unter *Konzentrationen von spezifischen Verunreinigungen, die sich auf die Durchführung des Herstellverfahrens von synthetischem Quarzglas als nicht kritisch auswirken,* werden im Rahmen der vorliegenden Erfindungen Konzentrationen von Verunreinigungen verstanden, die unter den anzuwendenden Verdampfungsbedingungen allenfalls zur Ausbildung von gelartigen und gummiartigen Rückständen führen, die den kontinuierlichen Betrieb der Herstellung von synthetischem Quarzglas für einen Zeitraum von mindestens 24 Stunden, weiter vorzugsweise mindestens 48 Stunden, noch weiter bevorzugt mindestens 72 Stunden, noch weiter bevorzugt mindestens 96 Stunden, nicht stören.

Dabei sollen insbesondere Ablagerungen in den verwendeten Verdampferleitungen vermieden werden.

Gelöst wird diese Aufgabe durch das im Folgenden beschriebene erfindungsgemäße Verfahren zur Herstellung von synthetischem Quarzglas sowie die Verwendung von einer spezifischen Zusammensetzung als Einsatzmaterialstrom in einem Verfahren zur Herstellung von synthetischem Quarzglas.

Erfindungsgemäß wird daher zunächst ein Verfahren zur Herstellung von synthetischem Quarzglas bereitgestellt, welches die folgenden Verfahrensschritte umfasst:
(a) Verdampfen eines Einsatzmaterials, das mindestens eine polymerisierbare Polyalkylsiloxanverbindung enthält, unter Bildung eines Dampfes des Einsatzmaterials;
(b) Zuführen des aus Verfahrensschritt (a) resultierenden gereinigten Einsatzmaterialdampfes zu einer Reaktionszone, in der der Einsatzmaterialdampf durch Oxidation und/oder durch Hydrolyse zu SiO₂-Partikeln umgesetzt wird; und
(c) Abscheiden der aus Verfahrensschritt (b) resultierenden SiO₂-Partikel auf einer Ablagerungsfläche;
(d) gegebenenfalls Trocknen und Verglasen der aus Verfahrensschritt (c) resultierenden SiO₂-Partikel unter Bildung von synthetischem Quarzglas.

Das erfindungsgemäße Verfahren ist dadurch gekennzeichnet, dass das Einsatzmaterial umfasst:
(1) mindestens eine Polyalkylsiloxanverbindung als ersten Bestandteil; sowie
(2) mindestens einen von der Polyalkylsiloxanverbindung abweichenden zweiten Bestandteil eines linearen Polydimethylsiloxan-α,ω-diols und/oder cyclischen Polymethylsiloxanols,
wobei der Gehalt an dem zweiten Bestandteil in dem Einsatzmaterial weniger als 50 ppm, bezogen auf das Einsatzmaterial, beträgt.

Im Rahmen der vorliegenden Erfindung handelt es sich bei dem zweiten Bestandteil des linearen Polydimethylsiloxan-α,ω-diols und/oder cyclischen Polymethylsiloxanols insbesondere um eine Verbindung, die ausgewählt ist aus der Gruppe, bestehend aus
a. 1,1,3,3-Tetramethyldisiloxan-1,3-diol;
b. 1,1,3,3,5,5-Hexamethyltrisiloxan-1,5-diol;
c. 1,1,3,3,5,5,7,7-Octamethyltetrasiloxan-1,7-diol;
d. 1,1,3,3,5,5,7,7,9,9-Decamethylpentasiloxan-1,9-diol;
e. 1,3,3,5,5-Pentamethyl-cyclotrisiloxan-1-ol;
f. 1,3,3,5,5,7,7-Heptamethyl-cyclotetrasiloxan-1-ol;
   und
g. Mischungen der vorgenannten linearen Polydimethylsiloxan-α,ω-diole und cyclischen Polymethylsiloxanole.

Die Verbindungen a., b., c., und d. sind lineare Polydimethylsiloxan-α,ω-diole, während die Verbindungen e. und f. cyclische Polymethylsiloxanole sind.

Bei dem zweiten Bestandteil kann es sich auch um eine Mischung mehrerer der vorgenannten Verbindungen handeln.

Erfindungsgemäß wurde herausgefunden, dass der spezifische, zuvor genannte zweite Bestandteil und insbesondere die zuvor gennannten konkreten Verbindungen a. bis f. bzw. Mischungen g. in einem Einsatzmaterial für die Herstellung von synthetischem Quarzglas als Verunreinigungen stören und zur Bildung von gelartigen Rückständen führen, welche die reproduzierbare Abscheidung von synthetischem Quarzglas stören. Darüber hinaus kann die Gegenwart dieses zuvor genannten zweiten Bestandteils in dem Einsatzmaterial zu größeren Stillstandzeiten der verwendeten Vorrichtungen führen, die sich aufgrund von notwendigen Reinigungsarbeiten ergeben. Daher ist der zweite Bestandteil im Rahmen der vorliegenden Erfindung allenfalls dergestalt in dem Einsatzmaterial vorhanden, dass die Konzentration dieses zweiten Bestandteils einen bestimmten Grenzwert in dem Einsatzmaterial nicht übersteigt und sich nicht kritisch im Sinne der vorliegenden Erfindung auswirkt.

Die nunmehr erfolgte genaue Definition der Verunreinigungen als lineare Polydimethylsiloxan-α,ω-diole bzw. cyclische Polymethylsiloxanole und insbesondere die genaue Definition der Verunreinigungen a. bis f. ermöglicht eine gezielte Überwachung des Ausgangsmaterialstroms auf diese störenden Verunreinigungen. Die vorliegend erfolgte Spezifizierung der Verunreinigungen verbessert daher das Verfahren zur Herstellung von synthetischem Quarzglas.

Sollten die Konzentrationen an diesem zweiten Bestandteil größer als erfindungsgemäß definiert sein, wird ein Einsatzmaterial erhalten, das bei Verwendung zur Herstellung von synthetischem Quarzglas zu gelartigen und gummiartigen Rückständen führt, die einen kontinuierlichen Betrieb der Vorrichtung nicht gewährleisten. Es wurde also überraschenderweise festgestellt, dass der Einsatz eines Einsatzmaterials, das die vorgenannten Verunreinigungen des zweiten Bestandteils in einer Menge kleiner als 50 ppm umfasst, dazu führt, dass die Neigung des Einsatzmaterials zu polymerisieren und/oder Gele zu bilden, reduziert wird.

In einer ersten Ausführungsform der vorliegenden Erfindung bezieht sich die erfindungsgemäße Grenzkonzentration des zweiten Bestandteils auf das Einsatzmaterial im flüssigen Zustand, d. h. auf das Einsatzmaterial vor dem Verdampfen im Verfahrensschritt (a). In einer zweiten Ausführungsform bezieht sich die erfindungsgemäße Grenzkonzentration des zweiten Bestandteils auf das Einsatzmaterial im gasförmigen Zustand, d. h. auf das Einsatzmaterial nach dem Verdampfen im ersten Verfahrensschritt (a) (Dampfgemisch).

Im Rahmen der vorliegenden Erfindung ist es bevorzugt, wenn sich die erfindungsgemäße Grenzkonzentration des zweiten Bestandteils auf das Einsatzmaterial im flüssigen Zustand, d. h. auf das Einsatzmaterial vor dem Verdampfen im Verfahrensschritt (a), bezieht.

In einer bevorzugten Ausgestaltung der vorliegenden Erfindung ist der zweite Bestandteil ausgewählt aus der Gruppe, bestehend aus
a. 1,1,3,3-Tetramethyldisiloxan-1,3-diol;
b. 1,1,3,3,5,5-Hexamethyltrisiloxan-1,5-diol;
c. 1,1,3,3,5,5,7,7-Octamethyltetrasiloxan-1,7-diol;
d. 1,1,3,3,5,5,7,7,9,9-Decamethylpentasiloxan-1,9-diol;
g. Mischungen der vorgenannten linearen Polydimethylsiloxan-α,ω-diole.

In einer weiteren Ausgestaltung der vorliegenden Erfindung ist der zweite Bestandteil 1,1,3,3-Tetramethyldisiloxan-1,3-diol (Verbindung a.), wobei der Gehalt an dem zweiten Bestandteil in dem Einsatzmaterial weniger als 50 ppm, bezogen auf das Einsatzmaterial, beträgt.

In einer weiteren Ausgestaltung der vorliegenden Erfindung ist der zweite Bestandteil 1,1,3,3,5,5-Hexamethyltrisiloxan-1,5-diol (Verbindung b.), wobei der Gehalt an dem zweiten Bestandteil in dem Einsatzmaterial weniger als 50 ppm, bezogen auf das Einsatzmaterial, beträgt.

In einer weiteren Ausgestaltung der vorliegenden Erfindung ist der zweite Bestandteil 1,1,3,3,5,5,7,7-Octamethyltetrasiloxan-1,7-diol (Verbindung c.), wobei der Gehalt an dem zweiten Bestandteil in dem Einsatzmaterial weniger als 50 ppm, bezogen auf das Einsatzmaterial, beträgt.

In einer weiteren Ausgestaltung der vorliegenden Erfindung ist der zweite Bestandteil 1,1,3,3,5,5,7,7,9,9-Decamethylpentasiloxan-1,9-diol (Verbindung d.), wobei der Gehalt an dem zweiten Bestandteil in dem Einsatzmaterial weniger als 50 ppm, bezogen auf das Einsatzmaterial, beträgt.

In einer weiteren Ausgestaltung der vorliegenden Erfindung ist der zweite Bestandteil 1,3,3,5,5-Pentamethyl-cyclotrisiloxan-1-ol (Verbindung e.), wobei der Gehalt an dem zweiten Bestandteil in dem Einsatzmaterial weniger als 50 ppm, bezogen auf das Einsatzmaterial, beträgt.

In einer weiteren Ausgestaltung der vorliegenden Erfindung ist der zweite Bestandteil 1,3,3,5,5,7,7-Heptamethyl-cyclotetrasiloxan-1-ol (Verbindung f.), wobei der Gehalt an dem zweiten Bestandteil in dem Einsatzmaterial weniger als 50 ppm, bezogen auf das Einsatzmaterial, beträgt.

In einer weiteren Ausgestaltung der vorliegenden Erfindung ist der zweite Bestandteil eine Mischung aus
a. 1,1,3,3-Tetramethyldisiloxan-1,3-diol;
b. 1,1,3,3,5,5-Hexamethyltrisiloxan-1,5-diol;
c. 1,1,3,3,5,5,7,7-Octamethyltetrasiloxan-1,7-diol;
d. 1,1,3,3,5,5,7,7,9,9-Decamethylpentasiloxan-1,9-diol;
e. 1,3,3,5,5-Pentamethyl-cyclotrisiloxan-1-ol;
f. 1,3,3,5,5,7,7-Heptamethyl-cyclotetrasiloxan-1-ol;
wobei der Gehalt an dem zweiten Bestandteil als Mischung in dem Einsatzmaterial weniger als 50 ppm, bezogen auf das Einsatzmaterial, beträgt.

Die erfindungsgemäß zulässige maximale Konzentration des zweiten Bestandteils beträgt 50 ppm, bezogen auf das Einsatzmaterial. Weiter bevorzugt ist es, wenn das Einsatzmaterial den vorgenannten zweiten Bestandteil in einer Menge von 40 ppm oder weniger, noch weiter bevorzugt 30 ppm oder weniger, noch weiter bevorzugt 20 ppm oder weniger, noch weiter bevorzugt 15 ppm oder weniger, noch weiter bevorzugt 10 ppm oder weniger, noch weiter bevorzugt 8 ppm oder weniger, jeweils bezogen auf das Einsatzmaterial, beträgt. Dabei ist der zweite Bestandteil in dem Einsatzmaterial im Allgemeinen zugegen, d. h. der Gehalt an dem zweiten Bestandteil in dem Einsatzmaterial ist größer als 0 ppm, bezogen auf das Einsatzmaterial.

Erfindungsgemäß wurde des Weiteren herausgefunden, dass die vollständige Abwesenheit des zweiten Bestandteils nicht zwingend erforderlich ist. Daher können im Rahmen der vorliegenden Erfindung Restmengen des zweiten Bestandteils in dem Einsatzmaterial enthalten sein. Insbesondere beträgt die Minimalmenge an dem zweiten Bestandteil, die in dem Einsatzmaterial enthalten sein kann, 0,5 ppm oder mehr, bezogen auf das Einsatzmaterial. In einer weiteren Ausgestaltung der vorliegenden Erfindung beträgt der Gehalt an dem zweiten Bestandteil in dem Einsatzmaterial mindestens 0,6 ppm oder mehr, noch weiter bevorzugt mindestens 1,0 ppm oder mehr, noch weiter bevorzugt mindestens 1,5 ppm oder mehr, noch weiter bevorzugt mindestens 3,0 ppm oder mehr, jeweils bezogen auf das Einsatzmaterial.

In einer weiteren Ausgestaltung der vorliegenden Erfindung beträgt der Gehalt an dem zweiten Bestandteil mehr als 0 ppm und weniger als 0,5 ppm, insbesondere mehr als 0 ppm und weniger als 0,4 ppm, insbesondere mehr als 0 ppm und weniger als 0,3 ppm, insbesondere mehr als 0 ppm und weniger als 0,2 ppm, insbesondere mehr als 0 ppm und weniger als 0,1 ppm.

Aus den vorgenannten Minimal- und Maximalmengen des zweiten Bestandteils ergeben sich die folgenden allgemeinen und bevorzugten Mengenbereiche des zweiten Bestandteils in dem Einsatzmaterial: Im Allgemeinen beträgt die Menge an dem zweiten Bestandteil in dem Einsatzmaterial 3 bis 45 ppm, weiter bevorzugt 2 bis 40 ppm, noch weiter bevorzugt 1,5 bis 30 ppm, noch weiter bevorzugt 1 bis 20 ppm, noch weiter bevorzugt 0,8 bis 15 ppm, noch weiter bevorzugt 0,5 bis 8 ppm, jeweils bezogen auf das Einsatzmaterial.

Unter Berücksichtigung der zuvor genannten Minimal- und Maximalmengen des zweiten Bestandteils in dem Einsatzmaterial betrifft die vorliegende Erfindung auch ein zuvor definiertes Verfahren zur Herstellung von synthetischem Quarzglas, wobei das Einsatzmaterial
(1) mindestens eine Polyalkylsiloxanverbindung als ersten Bestandteil; sowie
(2) mindestens einen von der Polyalkylsiloxanverbindung abweichenden zweiten Bestandteil eines linearen Polydimethylsiloxan-α,ω-diols und/oder cyclischen Polymethylsiloxanols, ausgewählt aus der Gruppe, bestehend aus
   a. 1,1,3,3-Tetramethyldisiloxan-1,3-diol;
   b. 1,1,3,3,5,5-Hexamethyltrisiloxan-1,5-diol;
   c. 1,1,3,3,5,5,7,7-Octamethyltetrasiloxan-1,7-diol;
   d. 1,1,3,3,5,5,7,7,9,9-Decamethylpentasiloxan-1,9-diol;
   e. 1,3,3,5,5-Pentamethyl-cyclotrisiloxan-1-ol;
   f. 1,3,3,5,5,7,7-Heptamethyl-cyclotetrasiloxan-1-ol
      und
   g. Mischungen der vorgenannten linearen Polydimethylsiloxan-α,ω-diole und cyclischen Polymethylsiloxanole
enthält, wobei der Gehalt an dem zweiten Bestandteil in dem Einsatzmaterial weniger als 50 ppm, bezogen auf die Zusammensetzung des Einsatzmaterials, beträgt.

In einer weiteren bevorzugten Ausgestaltung des erfindungsgemäßen Verfahrens beträgt der Gehalt an dem zweiten Bestandteil, ausgewählt aus der Gruppe, bestehend aus
a. 1,1,3,3-Tetramethyldisiloxan-1,3-diol;
b. 1,1,3,3,5,5-Hexamethyltrisiloxan-1,5-diol;
c. 1,1,3,3,5,5,7,7-Octamethyltetrasiloxan-1,7-diol;
d. 1,1,3,3,5,5,7,7,9,9-Decamethylpentasiloxan-1,9-diol;
   und
g. Mischungen der vorgenannten linearen Polydimethylsiloxan-α,ω-diole in dem Einsatzmaterial weniger als 50 ppm, bezogen auf das Einsatzmaterial.

Die allgemeinen und bevorzugten Mengen an dem zweiten Bestandteil in dem Einsatzmaterial sind wie vorstehend beschrieben definiert.

Im Folgenden werden die einzelnen Verfahrensschritte des erfindungsgemäßen Verfahrens näher beschrieben.

### Verfahrensschritt (a) - Verdampfen des Einsatzmaterials

Im Verfahrensschritt (a) wird ein Einsatzmaterial, das mindestens eine Polyalkylsiloxanverbindung als ersten Bestandteil; sowie mindestens einen von der Polyalkylsiloxanverbindung abweichenden zweiten Bestandteil eines linearen Polydimethylsiloxan-α,ω-diols und/oder cyclischen Polymethylsiloxanols, insbesondere ausgewählt aus der Gruppe, bestehend aus
a. 1,1,3,3-Tetramethyldisiloxan-1,3-diol;
b. 1,1,3,3,5,5-Hexamethyltrisiloxan-1,5-diol;
c. 1,1,3,3,5,5,7,7-Octamethyltetrasiloxan-1,7-diol;
d. 1,1,3,3,5,5,7,7,9,9-Decamethylpentasiloxan-1,9-diol;
e. 1,3,3,5,5-Pentamethyl-cyclotrisiloxan-1-ol;
f. 1,3,3,5,5,7,7-Heptamethyl-cyclotetrasiloxan-1-ol
   und
g. Mischungen der vorgenannten linearen Polydimethylsiloxan-α,ω-diole und cyclischen Polymethylsiloxanole.
enthält, unter Bildung eines Einsatzmaterialdampfes verdampft.

Grundsätzlich kann erfindungsgemäß jede Polyalkylsiloxanverbindung, welche sich zur Herstellung von synthetischem Quarzglas eignet, als erster Bestandteil verwendet werden. Im Rahmen der Erfindung umfasst der Begriff Polyalkylsiloxan sowohl lineare (umfassend auch verzweigte Strukturen) als auch zyklische Molekularstrukturen.

Besonders geeignete cyclische Vertreter sind Polyalkylsiloxane mit der allgemeinen Summenformel

SiₚOₚ(R)₂ₚ,

wobei p eine ganze Zahl größer 2 ist. Der Rest "R" ist eine Alkylgruppe, im einfachsten Fall eine Methylgruppe.

Polyalkylsiloxane zeichnen sich durch einen besonders hohen Anteil an Silizium pro Gewichtsanteil aus, was zur Wirtschaftlichkeit ihres Einsatzes bei der Herstellung von synthetischem Quarzglas beiträgt.

Die Polyalkylsiloxanverbindung ist dabei vorzugsweise ausgewählt aus der Gruppe bestehend aus Hexamethylcyclotrisiloxan (D3), Octamethylcyclotetrasiloxan (D4), Decamethylcyclopentasiloxan (D5), Dodecamethylcyclohexasiloxan (D6), Tetradecamethylcycloheptasiloxan (D7), Hexadecamethylcyclooctasiloxan (D8) sowie deren linearen Homologen und beliebigen Mischungen der vorgenannten Verbindungen. Die Notation D3, D4, D6, D7 und D8 entstammt dabei einer von General Electric Inc. eingeführten Notation, bei der Buchstabe "D" die Gruppe [-(CH₃)₂Si-O]- repräsentiert. Die Notation ist den auf dem Fachgebiet tätigen Personen bekannt.

Im Rahmen der vorliegenden Erfindung können auch Mischungen der vorgenannten Polyalkylsiloxanverbindungen verwendet werden.

Im Rahmen der vorliegenden Erfindung wird mindestens eine Polyalkylsiloxanverbindung (erster Bestandteil) vorzugsweise ausgewählt aus der Gruppe, bestehend aus Hexamethylcyclotrisiloxan (D3), Octamethylcyclotetrasiloxan (D4), Decamethylcyclopentasiloxan (D5) und Mischungen davon.

Wegen der großtechnischen Verfügbarkeit in hoher Reinheit wird derzeit Octamethylcyclotetrasiloxan (OMCTS, D4) bevorzugt eingesetzt. Im Rahmen der vorliegenden Erfindung ist es daher insbesondere bevorzugt, wenn es sich bei der Polyalkylsiloxanverbindung des ersten Bestandteils um Octamethylcyclotetrasiloxan (D4) handelt.

Grundsätzlich ist es möglich, dass das Einsatzmaterial vor dem Einbringen in den Verfahrensschritt (a) einer Aufreinigung unterzogen wird. Dem Fachmann sind solche Aufreinigungsverfahren bekannt. In einer bevorzugten Ausführungsform wird das Einsatzmaterial vor dem Verfahrensschritt (a) einer Aufreinigung unterworfen, um den Gehalt des zweiten Bestandteils in dem Einsatzmaterial auf die zuvor genannten Spezifikationen einzustellen. Diese Aufreinigung kann beispielsweise durch eine Destillation oder eine Festphasen-Extraktion, beispielsweise gemäß US 6,590,116, bei welcher der zweite Bestandteil an einem Silica-Gel-Bett aus dem Einsatzmaterialstrom extrahiert wird, erfolgen. Dabei werden die Verfahrensbedingungen der Aufreinigung vorzugsweise so gewählt, dass der zweite Bestandteil einen wie vorstehend definierten Gehalt aufweist. Ein möglicher Parameter, den der Fachmann unter den gegebenen Bedingungen durch sein Fachwissen auswählen kann, ist beispielsweise die Verweilzeit bei der Festphasen-Extraktion.

Die Verdampfung des Einsatzmaterials kann mit oder ohne Anwesenheit einer Trägergas-Komponente erfolgen. Bevorzugt erfolgt die Verdampfung des Einsatzmaterials in Anwesenheit eines Trägergases, da dadurch die Verdampfung bei Temperaturen unterhalb des Siedepunktes der Polyalkylsiloxanverbindung als ersten Bestandteil des Einsatzmaterials erfolgen kann. Dies bedeutet, dass der Einsatzmaterialdampf bevorzugt zusätzlich ein Trägergas umfasst. Eine solche Vorgehensweise ist bevorzugt, wenn die Verdampfung des Einsatzmaterials unterhalb seines Siedepunktes stattfinden soll. Das Inertgas ist bevorzugt chemisch inert und ist weiter bevorzugt Stickstoff oder Argon. Alternativ kann als Trägergas auch Sauerstoff verwendet werden. Dabei liegt das Molverhältnis der Polyalkylsiloxanverbindung (erster Bestandteil) zum Trägergas bevorzugt im Bereich von 0,01 bis 2, besonders bevorzugt im Bereich von 0,02 bis 1,5, ganz besonders bevorzugt im Bereich von 0,05 bis 1,25. Insbesondere ist es bevorzugt, dass als Trägergas Stickstoff mit einem Feuchtegehalt von kleiner 40 Volumen-ppm und als Polyalkylsiloxanverbindung OMCTS (erster Bestandteil) eingesetzt wird. Dabei ist es des Weiteren bevorzugt, dass das molekulare Verhältnis von OMCTS zu Stickstoff im Bereich von 0,015 bis 1,5 liegt.

Der Verfahrensschritt des Verdampfens ist dem Fachmann an sich bekannt. Dabei wird das Einsatzmaterial je nach gewähltem molekularem Verhältnis der Polyalkylsiloxanverbindung (erster Bestandteil) und Trägergas vorzugsweise bei Temperaturen zwischen 120 und 200 °C in eine dampfförmige Phase überführt. Dabei sollte die Verdampfungstemperatur in der Verdampfungskammer immer mindestens einige Grad oberhalb des Taupunktes der Polyalkylsiloxanverbindung (erster Bestandteil) sein. Der Taupunkt ist wiederum abhängig vom gewählten molekularen Verhältnis aus Polyalkylsiloxanverbindung (erster Bestandteil) und Trägergas. In einer bevorzugten Ausführungsform wird dazu das Einsatzmaterial vor dem Verdampfen auf Temperaturen zwischen 40 und 120 °C vorerwärmt und anschließend in eine Verdampfungskammer versprüht, die eine höhere Temperatur als die Vorerwärmung der Einsatzstoffe aufweist. Das inerte Trägergas kann in einer bevorzugten Ausführungsform zusätzlich auf Temperaturen von bis zu 250 °C vorerwärmt werden, bevor es der Verdampfungskammer zugeführt wird. Von Vorteil ist, dass die Temperatur in der Verdampfungskammer im Mittel immer oberhalb der Taupunkttemperatur der Mischung aus Polyalkylsiloxanverbindung (erster Bestandteil) und Trägergas liegt. Geeignete Verdampfungsverfahren werden z. B. in den Internationalen Patentanmeldungen WO 2013/087751 A und WO 2014/187513 A sowie der deutschen Patentanmeldung DE 10 2013 209 673 A beschrieben.

Im Rahmen der Erfindung beschreibt der Begriff "Taupunkt" die Temperatur, bei der sich ein Gleichgewichtszustand von kondensierender und verdunstender Flüssigkeit einstellt.

Bei der Verwendung von Temperaturen unterhalb des Siedepunkts des Einsatzmaterials erfolgt die Verdampfung bevorzugt zusammen mit einem inerten Trägergas.

Im Rahmen der vorliegenden Erfindung wird unter einer "Verdampfung" der Vorgang verstanden, bei der das Einsatzmaterial im Wesentlichen von der flüssigen Phase in eine gasförmige Phase überführt wird. Dies geschieht bevorzugt, indem, wie oben beschrieben, Temperaturen verwendet werden, welche oberhalb des Taupunktes der Polyalkylsiloxanverbindung als erster Bestandteil des Einsatzmaterials liegen. Dem Fachmann ist dabei bewusst, dass verfahrenstechnisch nicht ausgeschlossen werden kann, dass kleine Flüssigkeitstropfen des Einsatzmaterials mitgerissen werden können. Somit wird im Verfahrensschritt (a) bevorzugt ein Einsatzmaterialdampf erzeugt, welcher vorzugsweise nicht weniger als 97 Massen-%, bevorzugt nicht weniger als 98 Massen-%, besonders bevorzugt nicht weniger als 99 Massen-%, ganz besonders bevorzugt nicht weniger als 99,9 Massen% gasförmige Bestandteile enthält.

In dem Verfahrensschritt (a) kann der Einsatzmaterialdampf gegebenenfalls durch mindestens eine Reinigungsvorrichtung durchgeleitet werden, um den Einsatzmaterialdampf zu reinigen. Die Reinigungsvorrichtung kann beispielsweise ein Membranfilter, wie in der WO 2016/131849 A beschrieben, sein.

Der durch den Verfahrensschritt (a) erzeugte Einsatzmaterialdampf wird im Anschluss dem Verfahrensschritt (b) zugeleitet.

### Verfahrensschritt (b) - Umsetzung des Einsatzmaterialdampfes

Im Verfahrensschritt (b) wird der aus Verfahrensschritt (a) resultierende gereinigte Einsatzmaterialdampf zu einer Reaktionszone geführt, in der der Einsatzmaterialdampf durch Oxidation und/oder oder durch Hydrolyse zu SiO₂-Partikeln umgesetzt wird.

Dieser Verfahrensschritt entspricht insbesondere einem bekannten Sootverfahren oder einem bekannten Direktverglasungsverfahren. Die möglichen Ausgestaltungen sind dem Fachmann bekannt.

### Verfahrensschritt (c) - Abscheiden der SiO₂-Partikel

Im Verfahrensschritt (c) werden die aus Verfahrensschritt (b) resultierenden SiO₂-Partikel auf einer Ablagerungsfläche abgeschieden. Die möglichen Ausgestaltungen sind dem Fachmann bekannt.

### Verfahrensschritt (d) - gegebenenfalls Trocknen und Verglasen

Im Verfahrensschritt (d) werden die aus Verfahrensschritt (c) resultierenden SiO₂-Partikel unter Bildung von synthetischem Quarzglas gegebenenfalls getrocknet und verglast. Dieser Verfahrensschritt ist insbesondere dann notwendig, wenn die zuvor durchgeführten Verfahrensschritte gemäß einem Sootverfahren durchgeführt wurden. Die möglichen Ausgestaltungen sind dem Fachmann bekannt.

Insgesamt eignet sich das erfindungsgemäße Verfahren auch zur Herstellung von synthetischem Quarzglas durch "Direktverglasen". Bei diesem Verfahren kommt es auf Grund hinreichend hoher Temperaturen bei der Abscheidung der SiO₂-Partikel im Verfahrensschritt (c) auf einer Ablagerungsfläche zu einem direkten Verglasen der SiO₂-Partikel. Beim "Direktverglasen" wird daher auf den optionalen Verfahrensschritt (d) verzichtet. Darüber hinaus eignet sich das erfindungsgemäße Verfahren auch zur Herstellung von synthetischen Quarzglas nach dem "Sootverfahren", bei welchem die Temperatur beim Abscheiden der SiO₂-Partikel im Verfahrensschritt (c) so niedrig ist, dass eine poröse SiO₂-Sootschicht erhalten wird, die im separaten Verfahrensschritt (d) zu synthetischem Quarzglas getrocknet und verglast wird.

Das erfindungsgemäße Verfahren eignet sich zur Herstellung von synthetischem Quarzglas, welches als ein Außen- oder Innenabscheideverfahren durchgeführt wird. Wenn das erfindungsgemäße Verfahren als Außenabscheideverfahren durchgeführt wird, so handelt es sich bevorzugt um ein OVD-Verfahren (Outside Vapour Phase Deposition), VAD-Verfahren (Vapour Phase Axial Deposition) oder PECVD-Verfahren (Plasma Enhanced Chemical Vapour Deposition). Wenn das erfindungsgemäße Verfahren als Innenabscheideverfahren durchgeführt wird, so handelt es sich bevorzugt um ein MCVD-Verfahren (Modified Chemical Vapour Deposition).

### Verwendung

In einem weiteren Aspekt der vorliegenden Erfindung wird die Verwendung einer Zusammensetzung als Einsatzmaterial, welche
(1) mindestens eine Polyalkylsiloxanverbindung als ersten Bestandteil; sowie
(2) mindestens einen von der Polyalkylsiloxanverbindung abweichenden zweiten Bestandteil eines linearen Polydimethylsiloxan-α,ω-diols und/oder cyclischen Polymethylsiloxanols
enthält, zur Herstellung von synthetischem Quarzglas beansprucht, wobei der Gehalt an dem zweiten Bestandteil in dem Einsatzmaterial weniger als 50 ppm, bezogen auf die Zusammensetzung des Einsatzmaterials, beträgt.

Im Rahmen der vorliegenden Erfindung handelt es sich bei dem zweiten Bestandteil des linearen Polydimethylsiloxan-α,ω-diols bzw. cyclischen Polymethylsiloxanols, wie bereits ausgeführt, insbesondere um eine Verbindung, die ausgewählt ist aus der Gruppe bestehend aus
a. 1,1,3,3-Tetramethyldisiloxan-1,3-diol;
b. 1,1,3,3,5,5-Hexamethyltrisiloxan-1,5-diol;
c. 1,1,3,3,5,5,7,7-Octamethyltetrasiloxan-1,7-diol;
d. 1,1,3,3,5,5,7,7,9,9-Decamethylpentasiloxan-1,9-diol;
e. 1,3,3,5,5-Pentamethyl-cyclotrisiloxan-1-ol;
f. 1,3,3,5,5,7,7-Heptamethyl-cyclotetrasiloxan-1-ol,
   und
g. Mischungen der vorgenannten linearen Polydimethylsiloxan-α,ω-diole und cyclischen Polymethylsiloxanole.

Bei dem zweiten Bestandteil des Siloxanmonools bzw. Polydimethylsiloxan-α,ω-diols kann es sich analog den obigen Ausführungen somit auch um eine Mischung mehrerer Verbindungen handeln.

In einer ersten Ausführungsform der vorliegenden Erfindung bezieht sich die erfindungsgemäße Grenzkonzentration des zweiten Bestandteils auf die Zusammensetzung im flüssigen Zustand. In einer zweiten Ausführungsform bezieht sich die erfindungsgemäße Grenzkonzentration des zweiten Bestandteils auf die Zusammensetzung im gasförmigen Zustand.

In einer bevorzugten Ausgestaltung der vorliegenden Erfindung ist der zweite Bestandteil ausgewählt aus der Gruppe, bestehend aus
a. 1,1,3,3-Tetramethyldisiloxan-1,3-diol;
b. 1,1,3,3,5,5-Hexamethyltrisiloxan-1,5-diol;
c. 1,1,3,3,5,5,7,7-Octamethyltetrasiloxan-1,7-diol;
d. 1,1,3,3,5,5,7,7,9,9-Decamethylpentasiloxan-1,9-diol;
   und
g. Mischungen der vorgenannten linearen Polydimethylsiloxan-α,ω-diole.

In einer weiteren Ausgestaltung der vorliegenden Erfindung ist der zweite Bestandteil 1,1,3,3-Tetramethyldisiloxan-1,3-diol (Verbindung a.), wobei der Gehalt an dem zweiten Bestandteil in der Zusammensetzung weniger als 50 ppm, bezogen auf die Zusammensetzung des Einsatzmaterials, beträgt.

In einer weiteren Ausgestaltung der vorliegenden Erfindung ist der zweite Bestandteil 1,1,3,3,5,5-Hexamethyltrisiloxan-1,5-diol (Verbindung b.), wobei der Gehalt an dem zweiten Bestandteil in der Zusammensetzung weniger als 50 ppm, bezogen auf die Zusammensetzung des Einsatzmaterials, beträgt.

In einer weiteren Ausgestaltung der vorliegenden Erfindung ist der zweite Bestandteil 1,1,3,3,5,5,7,7-Octamethyltetrasiloxan-1,7-diol (Verbindung c.), wobei der Gehalt an dem zweiten Bestandteil in der Zusammensetzung weniger als 50 ppm, bezogen auf die Zusammensetzung des Einsatzmaterials, beträgt.

In einer weiteren Ausgestaltung der vorliegenden Erfindung ist der zweite Bestandteil 1,1,3,3,5,5,7,7,9,9-Decamethylpentasiloxan-1,9-diol (Verbindung d.), wobei der Gehalt an dem zweiten Bestandteil in der Zusammensetzung weniger als 50 ppm, bezogen auf die Zusammensetzung des Einsatzmaterials, beträgt.

In einer weiteren Ausgestaltung der vorliegenden Erfindung ist der zweite Bestandteil 1,3,3,5,5-Pentamethyl-cyclotrisiloxan-1-ol (Verbindung e.), wobei der Gehalt an dem zweiten Bestandteil in der Zusammensetzung weniger als 50 ppm, bezogen auf die Zusammensetzung des Einsatzmaterials, beträgt.

In einer weiteren Ausgestaltung der vorliegenden Erfindung ist der zweite Bestandteil 1,3,3,5,5,7,7-Heptamethyl-cyclotetrasiloxan-1-ol (Verbindung f.), wobei der Gehalt an dem zweiten Bestandteil in der Zusammensetzung weniger als 50 ppm, bezogen auf die Zusammensetzung des Einsatzmaterials, beträgt.

In einer weiteren Ausgestaltung der vorliegenden Erfindung ist der zweite Bestandteil eine Mischung aus
a. 1,1,3,3-Tetramethyldisiloxan-1,3-diol;
b. 1,1,3,3,5,5-Hexamethyltrisiloxan-1,5-diol;
c. 1,1,3,3,5,5,7,7-Octamethyltetrasiloxan-1,7-diol;
d. 1,1,3,3,5,5,7,7,9,9-Decamethylpentasiloxan-1,9-diol;
e. 1,3,3,5,5-Pentamethyl-cyclotrisiloxan-1-ol;
f. 1,3,3,5,5,7,7-Heptamethyl-cyclotetrasiloxan-1-ol,
wobei der Gehalt an dem zweiten Bestandteil in der Zusammensetzung weniger als 50 ppm, bezogen auf die Zusammensetzung des Einsatzmaterials, beträgt.

Die allgemeinen und bevorzugten Mengen an dem zweiten Bestandteil in dem Einsatzmaterial sind wie vorstehend beschreiben definiert.

### Quarzglas

In einem weiteren Aspekt der vorliegenden Erfindung wird synthetisches Quarzglas bereitgestellt, welches durch das erfindungsgemäße Verfahren erhältlich ist. Das so erhaltene Quarzglas weist eine Homogenität und Reproduzierbarkeit auf, welche aus der effizienten Aufreinigung des Einsatzmaterialdampfes resultiert.

### Ausführungsbeispiel

Das flüssige Einsatzmaterial OMCTS wird zusammen mit Stickstoff als Trägergas, welches auf 180 °C vorgewärmt wurde, in einem Verdampfer gemäß der Ausgestaltung der Internationalen Patentanmeldung PCT/EP2012/075346 bei 170 °C verdampft. Die Zusammensetzung des Stickstoff-OMCTS-Dampfgemischs ist so eingestellt, dass der Taupunkt von OMCTS unter den gewählten Prozessbedingungen bei 125 °C liegt.

| Beispiel | Gehalt an Siloxandiolen | Ablagerungen im Dampfverteilungssystem nach der Verdampfung von 2 to OMCTS | Brennersatzwechsel nach X Chargen |
|---|---|---|---|
| 1 | 45 ppm | +++ | X=8 |
| 2 | 31 ppm | ++ | X=15 |
| 3 | 15 ppm | ++ | X=40 |
| 4 | 8ppm | + | X=78 |
| 5 | 5ppm | + | >=100 |

| | | | |
|---|---|---|---|
| In der vorstehenden Tabelle weisen die einzelnen Abkürzungen folgende Bedeutung auf: +: Man findet im Dampf-Leitungssystem keine visuellen Hinweise auf polymere Ablagerungen. ++: Man findet im Dampf-Leitungssystem vereinzelt kleine Stellen mit polymeren Ablagerungen. +++: Man findet im Dampf-Leitungssystem deutliche Hinweise für Ablagerungen. | | | |

Die Ablagerungen im Verdampfersystem sind ein Maß für den Gehalt an Siloxandiolen, wobei die Wirksamkeit nach der Verdampfung von jeweils 2 to OMCTS gemessen wird.

Der Gehalt an Siloxanolen und Siloxandiolen betrifft in Summe die folgenden Verbindungen:
a. 1,1,3,3-Tetramethyldisiloxan-1,3-diol;
b. 1,1,3,3,5,5-Hexamethyltrisiloxan-1,5-diol;
c. 1,1,3,3,5,5,7,7-Octamethyltetrasiloxan-1,7-diol;
d. 1,1,3,3,5,5,7,7,9,9-Decamethylpentasiloxan-1,9-diol;
e. 1,3,3,5,5-Pentamethyl-cyclotrisiloxan-1-ol;
f. 1,3,3,5,5,7,7-Heptamethyl-cyclotetrasiloxan-1-ol.

## Patentansprüche

1. Verfahren zur Herstellung von synthetischem Quarzglas, **gekennzeichnet durch** die folgenden Verfahrensschritte:
(a) Verdampfen eines Einsatzmaterials, das mindestens eine polymerisierbare Polyalkylsiloxanverbindung enthält, unter Bildung eines Dampfes des Einsatzmaterials;
(b) Zuführen des aus Verfahrensschritt (a) resultierenden gereinigten Einsatzmaterialdampfes zu einer Reaktionszone, in der der Einsatzmaterialdampf durch Oxidation und/oder durch Hydrolyse zu SiO₂-Partikeln umgesetzt wird; und
(c) Abscheiden der aus Verfahrensschritt (b) resultierenden SiO₂-Partikel auf einer Ablagerungsfläche;
(d) gegebenenfalls Trocknen und Verglasen der aus Verfahrensschritt (c) resultierenden SiO₂-Partikel unter Bildung von synthetischem Quarzglas;
**dadurch gekennzeichnet, dass** das Einsatzmaterial umfasst:
(1) mindestens eine Polyalkylsiloxanverbindung als ersten Bestandteil; sowie
(2) mindestens einen von der Polyalkylsiloxanverbindung abweichenden zweiten Bestandteil eines linearen Polydimethylsiloxan-α,ω-diols und/oder cyclischen Polymethylsiloxanols,
wobei der Gehalt an dem zweiten Bestandteil in dem Einsatzmaterial weniger als 50 ppm, bezogen auf das Einsatzmaterial, beträgt.

2. Verfahren nach Patentanspruch 1, **dadurch gekennzeichnet, dass** es sich bei dem zweiten Bestandteil des linearen Polydimethylsiloxan-α,ω-diols und/oder cyclischen Polymethylsiloxanols um eine Verbindung, die ausgewählt ist aus der Gruppe, bestehend aus
a. 1,1,3,3-Tetramethyldisiloxan-1,3-diol;
b. 1,1,3,3,5,5-Hexamethyltrisiloxan-1,5-diol;
c. 1,1,3,3,5,5,7,7-Octamethyltetrasiloxan-1,7-diol;
d. 1,1,3,3,5,5,7,7,9,9-Decamethylpentasiloxan-1,9-diol;
e. 1,3,3,5,5-Pentamethyl-cyclotrisiloxan-1-ol;
f.1,3,3,5,5,7,7-Heptamethyl-cyclotetrasiloxan-1-ol,
g. Mischungen der vorgenannten linearen Polydimethylsiloxan-α,ω-diole und/oder cyclischen Polymethylsiloxanole;
handelt.

3. Verfahren nach Patentanspruch 1 oder 2, **dadurch gekennzeichnet, dass** der zweite Bestandteil ausgewählt ist aus der Gruppe, bestehend aus
a. 1,1,3,3-Tetramethyldisiloxan-1,3-diol;
b. 1,1,3,3,5,5-Hexamethyltrisiloxan-1,5-diol;
c. 1,1,3,3,5,5,7,7-Octamethyltetrasiloxan-1,7-diol;
d. 1,1,3,3,5,5,7,7,9,9-Decamethylpentasiloxan-1,9-diol;
g. Mischungen der vorgenannten linearen Polydimethylsiloxan-α,ω-diole und/oder cyclischen Polymethylsiloxanole.

4. Verfahren nach einem der Patentansprüche 1 bis 3, **dadurch gekennzeichnet, dass** der Gehalt an dem zweiten Bestandteil in dem Einsatzmaterial mehr als 0 ppm, bezogen auf das Einsatzmaterial, beträgt.

5. Verfahren nach einem der Patentansprüche 1 bis 4, **dadurch gekennzeichnet, dass** der Gehalt an dem zweiten Bestandteil in dem Einsatzmaterial 3 bis 45 ppm, bezogen auf das Einsatzmaterial, beträgt.

6. Verfahren nach einem der Patentansprüche 1 bis 5, **dadurch gekennzeichnet, dass** im Verfahrensschritt (a) zusätzlich ein Durchleiten des Einsatzmaterialdampfes durch mindestens eine Reinigungsvorrichtung, um den Einsatzmaterialdampf zu reinigen, erfolgt.

7. Verfahren nach einem der Patentansprüche 1 bis 6, **dadurch gekennzeichnet, dass** der Dampf des Einsatzmaterials zusätzlich ein Inertgas umfasst.

8. Verwendung einer Zusammensetzung, enthaltend
(1) mindestens eine Polyalkylsiloxanverbindung als ersten Bestandteil; sowie
(2) mindestens einen von der Polyalkylsiloxanverbindung abweichenden zweiten Bestandteil eines linearen Polydimethylsiloxan-α,ω-diols und/oder eines cyclisches Polymethylsiloxanols,
wobei der Gehalt an dem zweiten Bestandteil in der Zusammensetzung weniger als 50 ppm, bezogen auf die Zusammensetzung, beträgt,
zur Herstellung von synthetischem Quarzglas.

9. Verwendung nach Patentanspruch 8, **dadurch gekennzeichnet, dass** es sich bei dem zweiten Bestandteil des linearen Polydimethylsiloxan-α,ω-diols und/oder cyclischen Polymethylsiloxanols um eine Verbindung, die ausgewählt ist aus der Gruppe, bestehend aus
a. 1,1,3,3-Tetramethyldisiloxan-1,3-diol;
b. 1,1,3,3,5,5-Hexamethyltrisiloxan-1,5-diol;
c. 1,1,3,3,5,5,7,7-Octamethyltetrasiloxan-1,7-diol;
d. 1,1,3,3,5,5,7,7,9,9-Decamethylpentasiloxan-1,9-diol;
e. 1,3,3,5,5-Pentamethyl-cyclotrisiloxan-1-ol;
f. 1,3,3,5,5,7,7-Heptamethyl-cyclotetrasiloxan-1-ol,
g. Mischungen der vorgenannten linearen Polydimethylsiloxan-α,ω-diole und/oder cyclischen Polymethylsiloxanole;
handelt.

10. Verwendung nach Patentanspruch 8 oder 9, **dadurch gekennzeichnet, dass** der zweite Bestandteil ausgewählt ist aus der Gruppe, bestehend aus
a. 1,1,3,3-Tetramethyldisiloxan-1,3-diol;
b. 1,1,3,3,5,5-Hexamethyltrisiloxan-1,5-diol;
c. 1,1,3,3,5,5,7,7-Octamethyltetrasiloxan-1,7-diol;
d. 1,1,3,3,5,5,7,7,9,9-Decamethylpentasiloxan-1,9-diol;
g. Mischungen der vorgenannten linearen Polydimethylsiloxan-α,ω-diole.

11. Verwendung nach einem der Patentansprüche 8 bis 10, **dadurch gekennzeichnet, dass** der Gehalt an dem zweiten Bestandteil in der Zusammensetzung mehr als 0 ppm, bezogen auf die Zusammensetzung, beträgt.

12. Verwendung nach einem der Patentansprüche 8 bis 11, **dadurch gekennzeichnet, dass** der Gehalt an dem zweiten Bestandteil in der Zusammensetzung 0,3 bis 45 ppm, bezogen auf die Zusammensetzung, beträgt.

13. Verwendung nach einem der Patentansprüche 8 bis 12, **dadurch gekennzeichnet, dass** die mindestens eine polymerisierbare Polyalkylsiloxanverbindung als erster Bestandteil ausgewählt ist aus der Gruppe, bestehend aus Hexamethylcyclotrisiloxan (D3), Octamethylcyclotetrasiloxan (D4), Decamethylcyclopentasiloxan (D5), Dodecamethylcyclohexasiloxan (D6), Tetradecamethylcycloheptasiloxan (D7), Hexadecamethylcyclooctasiloxan (D8) sowie deren linearen Homologen und beliebigen Mischungen der vorgenannten Verbindungen.

14. Verwendung nach einem der Patentansprüche 8 bis 13, **dadurch gekennzeichnet, dass** die Zusammensetzung im gasförmigen Zustand verwendet wird.

15. Verwendung nach Patentanspruch 14, **dadurch gekennzeichnet, dass** die Zusammensetzung im gasförmigen Zustand zusätzlich ein Inertgas umfasst.
